# EUROPÄISCHE PATENTSCHRIFT

(11) **EP 2 179 266 B1**
(45) Veröffentlichungstag und Bekanntmachung des Hinweises auf die Patenterteilung: **17.10.2012**
(21) Anmeldenummer: 07703098.9
(22) Anmeldetag: 29.01.2007
(51) Int. Cl.: G01Q 20/04, G01N 27/12, G01N 27/00

(54) **Verfahren zur Herstellung eines Federelements**
Method of Fabrication of a Spring Element
Procédé de fabrication d'un élément élastique

(30) Priorität: 01.02.2006 DE 102006004922
(43) Veröffentlichungstag der Anmeldung: 28.04.2010
(73) Patentinhaber: Nanoscale Systems, Nanoss GmbH, 64293 Darmstadt (DE); Johann Wolfgang Goethe-Universität Frankfurt am Main, 60325 Frankfurt am Main (DE)
(72) Erfinder: KAYA, Alexander, 64293 Darmstadt (DE); HUTH, Michael, 65817 Eppstein (DE)
(74) Vertreter: Tergau & Walkenhorst
(86) Internationale Anmeldenummer: PCT/EP2007/000738
(87) Internationale Veröffentlichungsnummer: WO 2007/088018

(56) Entgegenhaltungen:
- EP-A2- 0 706 052
- EP-A2- 0 869 353
- WO-A-00/14476
- DE-A1- 3 603 449

## Beschreibung

Die Erfindung betrifft ein Verfahren zur Herstellung eines miniaturisierten Federelements mit einem biegbaren Grundkörper.

Miniaturisierte Federelemente mit einem biegbaren Grundkörper in mikroskopischen Abmessungen können in einer Vielzahl von Anwendungen zum Einsatz kommen. Derartige Federelemente umfassen üblicherweise einen biegbaren Grundkörper, der in Reaktion auf eine extern einwirkende mechanische Kraft deformiert oder ausgelenkt wird und bei Wegfall der externen Kraft wieder seine ursprüngliche Form annimmt. Die Auslenkung des Grundkörpers kann dabei insbesondere proportional zur einwirkenden Kraft sein. In miniaturisierter Form, also mit mikroskopischen Abmessungen des Grundkörpers, können derartige Federelemente beispielsweise als Mikrowaagen zum hochpräzisen Abwiegen einzelner Moleküle, als Sensorelemente in der Mikromechanik, Biosensorik oder der gleichen zum Einsatz kommen.

Eine besonders bedeutsame und verbreitete Anwendung derartiger miniaturisierter Federelemente ist darüber hinaus die Einbindung als so genannte Balkensonde oder Cantilever in einem Rasterkraftmikroskop. Bei einem derartigen Rasterkraftmikroskop wird das Prinzip ausgenutzt, dass aufgrund atomarer Kräfte zwischen einer feinen Sondenspitze und einer in unmittelbarer Nachbarschaft befindlichen, zu untersuchenden Oberfläche Wechselwirkungen zwischen der Sondenspitze und der Oberfläche entstehen, die für eine Auswertung der atomaren Struktur der Oberfläche herangezogen werden können. Dabei wird die Sondenspitze üblicherweise auf einem biegsamen Träger oder Grundkörper montiert, wobei sich in Abhängigkeit von der in atomarer Skala vorhandenen Konturierung der zu untersuchenden Oberfläche ortsabhängig eine entsprechende Auslenkung des biegsamen Grundkörpers einstellt. Durch geeignete Erfassung dieser Auslenkung oder auch durch die Erfassung geeignet gewählter Ansteuersignale, mit denen beispielsweise der Abstand zwischen Sondenspitze und zu untersuchender Oberfläche konstant gehalten wird, kann somit auf atomarer Skala ein Abbild der untersuchten Oberfläche erstellt werden.

Ein Sensorelement mit einer Detektorzone, deren elektrische Leitfähigkeit durch Tunnelprozesse zwischen in eine Matrix eingebetteten elektrisch leitfähigen Partikeln gegeben ist, ist aus der EP 0 706 052 A2 oder aus der EP 0 869 353 A2 bekannt.

Bei derartigen Anwendungen miniaturisierter Federelemente ist es üblicherweise von zentraler Bedeutung, die sich parameter- oder situationsabhängig einstellende Auslenkung des jeweiligen Federelements vergleichsweise genau messen oder erfassen zu können. Die Erfassung der Auslenkung kann dabei beispielsweise durch Lichtreflexion an der Oberseite des jeweiligen Federelements oder auch durch die Ausnutzung piezoresistiver Effekte im biegbaren Grundkörper erfolgen. Gerade im Hinblick auf die üblicherweise atomaren Dimensionen der zu untersuchenden Proben ist dabei eine hochgenaue und besonders zuverlässige Auslenkungserfassung besonders wünschenswert.

Der Erfindung liegt daher die Aufgabe zugrunde, ein Verfahren zur Herstellung eines miniaturisierten Federelements der oben genannten Art anzugeben, mit dem auf besonders zuverlässige Weise ein Federelement hergestellt werden kann, bei dem mit hoher Genauigkeit die Auslenkung des Federelements erfassbar ist.

Diese Aufgabe wird erfindungsgemäß mit dem Verfahren mit den Merkmalen des Anspruchs 1 gelöst.

Die Erfindung geht dabei von der Überlegung aus, dass die Auslenkung eines Federelements der genannten Art üblicherweise mit einer Verbiegung des biegbaren Grundkörpers einhergeht, die ihrerseits in mikroskopischen Dimensionen mit einer Längenänderung zumindest von einigen Raumbereichen, beispielsweise der bezüglich der sich einstellenden Krümmung der inneren oder äußeren Oberfläche des Grundkörpers, korreliert. Um eine besonders zuverlässige Erfassung der Auslenkung zu ermöglichen, sollte daher eine besonders empfindliche Erfassung auch kleinster Längenänderungen, insbesondere im oberflächennahen Bereich des biegbaren Grundkörpers, vorgesehen sein. Um dies zu ermöglichen, ist im Bereich einer Detektorzone des Grundkörpers ein System vorgesehen, das auch auf kleinste Längenänderungen sehr empfindlich mit einer vergleichsweise stark ausgeprägten Änderung seiner elektrischen Leitfähigkeit reagiert.

Dies ist erreichbar durch Bereitstellung eines Systems in der Detektorzone, bei dem durch elektrisch isolierte Nanopartikel, Dotierungen, Stör- oder Einfängstellen oder durch strukturelle Unordnung lokalisierte Zustände oder ein null-dimensionales Elektronengas oder auf andere Weise eingefangene Energiezustände für Ladungsträger gebildet werden. Ein Ladungstransport kann dann nur thermisch aktiviert bei Zuführung einer unterstützenden äußeren elektrischen, elektromagnetischen oder thermischen Aktivierungsenergie erfolgen. Mögliche Leitungsmechanismen sind: der so genannte Hüpfmechanismus (Hopping), Feldemissions- bzw. -ionisationseffekt, Poole-Frenkel-Effekt oder ein anders gearteter Tunneleffekt der Elektronen zwischen den lokalisierten Stellen oder Stör- bzw. Einfangstellen. Gerade bei derartigen Systemen, bei denen der Elektronentransport im Wesentlichen auf Tunnel-, Ionisations- oder Hoppingeffekten beruht, ist nämlich die elektrische Leitfähigkeit in extremem Maße vom Abstand der einzelnen lokalisierten Zustände zueinander abhängig, so dass bereits bei kleinsten Abstandsänderungen vergleichsweise große Auswirkungen auf die elektrische Leitfähigkeit erhältlich sind, insbesondere da sich die elektrischen Größen wie Widerstand oder Leitfähigkeit bei derartigen Systemen exponentiell mit dem Abstand zwischen den Tunnelpartnern ändern.

Zur Herstellung des Federelements ist ein an die Auslegungsgrundsätze des Federelements, insbesondere an die Bereitstellung der Detektorzone, besonders gut anpassbares Verfahren vorgesehen, nämlich eine Deposition durch lokale Energieanregung, wie beispielsweise eine ionenstrahlinduzierte, pyrolytisch induzierte oder photonenstrahlinduzierte Deposition, besonders vorteilhaft die elektronenstrahlinduzierte Deposition (EBID). Diese Verfahren basieren auf den unter einem gerasterten Teilchenstrahl, bestehend aus Elektronen, Ionen oder Photonen, oder einem Strahl aus elektromagnetischen Wellen stattfindenden physikalischen und chemischen Umbildungsprozessen eines am Strahlort vorhandenen Präkursorgases. Durch dieses Verfahren ist insbesondere im Sinne einer Deponatstrukturierung in mikroskopischem Maßstab eine gezielte Materialabscheidung von funktionalen Nanostrukturen möglich, wobei durch die Wahl geeigneter Depositionsparameter ein gezielter räumlicher Aufbau der gewünschten Strukturen begrenzt auf die im Endprodukt gewünschte räumliche Zusammensetzung möglich ist.

Damit ist eine spätere Nachbehandlung einmal deponierter Strukturen im Sinne herkömmlicher Methoden, wie beispielsweise durch lithographisches Ätzen oder dergleichen, nicht erforderlich, um beim miniaturisierten Endprodukt die gewünschte Raumform zu erzeugen. Der Deponat-Strukturierungsprozess basiert dabei auf dem Prinzip, dass Moleküle einer Ausgangsbausubstanz (Präkursor), die sich in der Gasphase befinden und innerhalb einer Vakuumumgebung auf einer Oberfläche adsorbieren, mit einer lokal konzentrierten Energieeinstrahlung, welche beispielsweise aus fokussierten Elektronen, Ionen oder Photonen oder anderen energetisch gebündelten Objekten bestehen kann, angeregt werden und durch einen Zersetzungs- oder Umwandlungsprozess ihrer Bindungen als Sediment oder Deponat dauerhaft auf einer Oberfläche eines in der Nähe befindlichen Substrats fixiert werden. Die anfängliche Materialablagerung dient dabei zugleich als Keimstelle für neue Ablagerungen, welche durch die lokale Position der Energieeinwirkung und deren Verweildauer geführt werden, so dass sich beliebige dreidimensionale Objekte auf der Unterlage, in Abhängigkeit der Fokussierbarkeit der Energiequelle mit bis zu Nanometerpräzisionsgenauigkeit abscheiden lassen.

Durch die geeignete Wahl der Ausgangssubstanzen oder Präkursor-Materialien sowie auch durch die geeignete Wahl der beim Depositionsprozess verwendeten Parameter ist dabei in besonders flexibler und weit reichender Weise eine Einflussnahme auf die mikroskopischen Eigenschaften des Endprodukts möglich. Um in der Detektorzone die gewünschte starke Abhängigkeit der elektrischen Leitfähigkeit von einer eventuellen Längenänderung und die dafür vorgesehene gezielte und vergleichsweise homogene Verteilung von Nanopartikeln in einer geeigneten Matrix sicherzustellen, werden dabei als Präkursor-Materialien vorteilhafterweise organische, anorganische, dielektrische oder metallorganische Komplexe, Monomere, Oligomere, Polymere oder Gemische aus diesen Monomeren, Oligomeren und Polymeren verwendet, die sich vorzugsweise in der Gasphase befinden und einen für die Deponierung besonders günstigen Dampfdruck aufweisen. Vorteilhafterweise wird als Präkursor-Substanz, insbesondere CH₃, C₅O₂H₇, C₅O₂F₃H₄, C₅O₂F₆H, C₅H₅, Me₂Au(acac) [Summenformel: (CH₃)₂AuC₅O₂H₇], Me₂Au(tfac) [Summenformel: (CH₃)₂AuC₅O₂F₃H₄], Me₂Au(hfac) [Summenformel: (CH₃)₂AuC₅O₂F₆H], Cu(hfac)₂ [Summenformel: Cu(C₅O₂F₆H)₂], CpPtMe₃ [Summenformel: C₅H₅Pt(CH₃)₃], CpMePtMe₃ [Summenformel: C₅H₄(CH₃)Pt(CH₃)₃], Mo(CO)₆, W(CO)₆, WF₆, [RhCl(PF₃)₂]₂, Co₂(Co)₈, AuCl(PF₃) und/oder Ni(CO)₄, verwendet.

Das genannte Depositionsverfahren ist insbesondere sowohl zur Herstellung einer Oberflächenbeschichtung zur Erzeugung der Detektorzone auf einem als Trägerkörper dienenden Substrat in der Art einer nachträglichen Veredelung des Trägerkörpers als auch zur Herstellung eines Bulk-Körpers geeignet, bei dem der Grundkörper des Federelements an sich bereits aus den in die Matrix eingebetteten Nanopartikeln gebildet ist und somit seinerseits in seiner Gesamtheit die Detektorzone bildet. Zur Herstellung derartiger Strukturen wird vorteilhafterweise ein zur energetischen Anregung der Präkursor-Substanzen vorgesehener energetischer Teilchenstrahl oder eine lokale pyrolytische Behandlung, beispielsweise durch einen Laserstrahl, hinsichtlich des Substrats lateral oder dreidimensional in Abhängigkeit von einer vorgegebenen Sollgeometrie des Deponats geführt.

Vorteilhafterweise wird dabei die Temperatur des Substrats während der Deposition geeignet geregelt. Dadurch wird die Geschwindigkeit der Oberflächendiffusionsprozesse auf dem Substrat beeinflusst, was zu einer regelbaren Nachlieferungsrate von Präkursormaterial und damit zu einer kontrollierten Wachstumsrate des Deponates führt. Alternativ kann die Nachlieferungsrate auch dadurch geregelt werden, indem die Temperatur der Präkursorquelle entweder erhöht oder vermindert wird, da dies direkten Einfluss auf den Dampfdruck des Präkursors nimmt.

Alternativ kann vorteilhafterweise auch die pyrolytische oder pyrolytisch induzierte Deposition zum Einsatz kommen. Feste Deponate können dabei auf einem Substrat auch abgeschieden werden, indem das Substrat nach einer ungerichteten Adsorption von Präkursor-Molekülen erwärmt wird, beispielsweise von unten über einen Heizdraht oder von oben durch einen Laserstrahl. Die Energiezufuhr bewirkt dann lokal die gewünschte Umwandlung der Präkursor-Materialien. Damit ist ein lateral zwar nur vergleichsweise grob strukturiertes Deponat erhältlich, das aber beispielsweise für eine nachträgliche Veredelung von Cantilevern auf Silizium-Basis besonders geeignet sein kann. Weiterhin könnte eine derartige pyrolytische Deposition zur Herstellung von Membranen zur Druckmessung dienen, bei denen eine laterale Feinstrukturierung nur von untergeordneter Bedeutung wäre.

Durch die Anwendung der genannten Deponatstrukturierung, insbesondere durch die Herstellung der Detektorzone oder auch des gesamten Grundkörpers des Federelements durch elektronenstrahleninduzierte Deposition oder auch durch ionenstrahlinduzierte, pyrolytisch induzierte oder photonenstrahlinduzierte Deposition, ist eine besonders hohe Flexibilität bei der Einstellung gewünschter Eigenschaften des Endprodukts erreichbar. Insbesondere kann durch die Wahl einer geeigneten Struktur für die Matrix nicht nur die elektrische Leitfähigkeit im Sinne der gewünschten Empfindlichkeit bei einer Längenänderung geeignet eingestellt werden, sondern vielmehr ermöglicht eine gezielte Beeinflussung der Herstellungsparameter bei der Deponierung der Strukturen auch eine gezielte Einflussnahme auf sonstige mikroskopische Eigenschaften. Insbesondere können dabei die mechanischen Eigenschaften des Grundkörpers und somit des gesamten Federelements abhängig vom vorgegebenen Einsatzzweck geeignet beeinflusst werden, wobei insbesondere eine für den Anwendungszweck besonders günstige Elastizität oder eine besonders günstige Güte des Federelements eingestellt werden können.

Beispielsweise lassen sich unter Verwendung von Präkursoren aus metallorganischen Komplexverbindungen besonders leicht biegbare, weiche Strukturen, insbesondere elektrisch leitfähige Materiestrukturen mit nanokristallinem Charakter für den Einsatz in der Tunnelelektronik, abscheiden. Präkursoren, die über einen hohen Kohlenstoffanteil verfügen, wie beispielsweise flüchtige Restgas-Ölmoleküle, bilden hingegen als Deponat aufgrund der im Agglomerat wirkenden kovalenten Kohlenstoffbindungen mechanisch besonders "harte", diamantähnliche Deponate, die sich als Federelemente besonders starr verhalten. Dies wird bei der Herstellung des Federelements in besonders vorteilhafterweise dadurch berücksichtigt, dass eine Anzahl der Parameter, Art, Menge und/oder Zusammensetzung der Präkursor-Substanzen, Gasdruck in der Depositionszone, Intensität der lokalen Energie-Applizierung (bspw. Elektronenstrahl), Einstrahldauer des Elektronenstrahls, Fokusgröße des Elektronenstrahls, Substratmaterial und/oder Substrattemperatur derart eingestellt werden, dass das Federelement eine vorgegebene Federkonstante und/oder eine vorgegebene Güte aufweist.

Durch eine geeignete Wahl der Depositionsparameter lassen sich auch Federelemente herstellen, die sich bei mechanischer Belastung im Vergleich zu halbleiterbasierten Federelementen aus Ein- oder Polykristallen (beispielsweise aus Si-Cantilevern) durch eine höhere Robustheit und Langlebigkeit bzw. Ermüdungsfreiheit auszeichnen. Die Depositionsparameter können beispielsweise so gewählt werden, dass das Federelement zu einem überwiegenden Teil aus einer Matrix mit dominant kovalenten Bindungsanteilen besteht; beispielsweise zwischen Kohlenstoffatomen in der Form einer diamantartigen Bindung (tetraedrische Koordinierung). Es können dann auch sehr harte Federelemente hergestellt werden, wenn die diamantartigen Bindungen nur lokal ausgebildet werden (amorphe Struktur). In einer weitgehend amorphen Struktur tritt aufgrund des Fehlens einer geordneten Atom-Gitterstruktur keine oder nur eine sehr geringe Versetzungsbildung auf. Die Struktur wird damit ermüdungsfrei, denn ein wichtiger Dissipationsprozess ist das Gleitern von Versetzungen. Daher sind derartige Kompositstrukturen generell sehr gut für Hartstoffanwendungen, beispielsweise zur Hartstoffbeschichtung, geeignet.

In diesem Zusammenhang kann auch berücksichtigt werden, dass die mit Nanometerpräzision frei wählbare Positionierbarkeit der Deponatfederstrukturen auf dem Substrat bei der Deposition zudem den Aufbau von vergleichsweise komplexen, funktional zusammenhängenden Mehrfach-Federsystemen erlaubt, so dass auf besonders einfache Weise die Herstellung von Federvorrichtungs-Feldern (so genannte Feder- oder Cantilever-Arrays) ermöglicht ist. Eine weitere Anpassbarkeit an anwendungsrelevante Ziele ist darüber hinaus auch dadurch gegeben, dass bei der vorgesehenen Deponatstrukturierung eine vergleichsweise hohe Flexibilität hinsichtlich geometrischer Aspekte gegeben ist. Insbesondere hängen die laterale Auflösung und das Aspektverhältnis (oder das Höhen-Breiten-Verhältnis) sowie weitere elastomechanische, elektrische und magnetische Eigenschaften des Deponats vergleichsweise empfindlich von der Art der gewählten Energiequelle, deren Stärke und deren Wirkungsdauer sowie dem für die Umwandlungsprozesse bei der Abscheidung des Deponats auf dem Substrat relevanten vergleichsweise komplexen Zusammenspiel von eingesetztem Präkursor-Material, dessen Menge und den sonstigen Umgebungsfaktoren wie beispielsweise Temperatur, Substratmaterial und Güte des Prozessvakuums ab. Durch Einflussnahme auf diese Parameter ist somit eine gezielte Einstellung verschiedener Eigenschaften des hergestellten Deponats möglich.

Im Falle der Dominanz von Hoppingprozessen für die elektrische Leitfähigkeit der Detektorzone, die in allgemein ungeordneten, strukturlosen Systemen wie beispielsweise amorphem Silizium auftritt, ist für diese die Temperaturabhängigkeit ihrer elektrischen Leitfähigkeit vorzugsweise annähernd durch die Beziehung In σ ~ t^{-γ} gegeben. Vorteilhafterweise wird die Detektorzone dabei derart ausgestaltet, dass der charakteristische Exponent γ dieser Beziehung einen Wert zwischen 0 und 1, vorzugsweise etwa den Wert 0,25, etwa den Wert 0,5 oder etwa den Wert 1, aufweist.

Im Falle der Dominanz von einfachen Tunnelprozessen, wie sie durch den Feldemissions- bzw. Ionisationseffekt oder den Poole-Frenkel-Effekt zwischen lokal wechselnden Zonen mit niedriger und hoher Leitfähigkeit entstehen und die nicht der Beziehung In σ ~ t^{-γ} folgen, weist die Detektorzone eine direkt exponentiell ausgeartete Sensivität gegen ortsverändernde mechanische Beanspruchungen auf, da der mit dem Tunneleffekt einhergehende Tunnelstrom exponentiell mit dem Abstand der Tunnelpartner abnimmt. Derartige lokal wechselnde Zonen mit niedriger und hoher Leitfähigkeit werden beispielsweise durch Kompositsysteme aus in einer elektrisch isolierenden Matrix (Basismedium) eingebetteten leitfähigen Nanokristalliten, Stör- oder Einfangstellen oder Dotierungen gebildet. Da die Exponentialfunktion unter allen Varianten die am stärksten wachsende Funktion ist, stellt das Verfahren der Deformationsdetektion durch den Tunneleffekt auch das sensibelste Verfahren für die Messung von Ortsveränderungen dar.

Zur Sicherstellung der vorgesehenen Dominanz der elektronischen Tunnel-, Ionisations- oder Hoppingprozesse für die elektrische Leitfähigkeit der Detektorzone weist das diese bildende Material vorteilhafterweise eine besonders geeignete Morphologie auf. Insbesondere ist die Morphologie in der Detektorzone dabei vorzugsweise derart gewählt, dass eine Vielzahl vergleichsweise gering ausgedehnter Zonen mit vergleichsweise hoher elektrischer Leitfähigkeit gebildet sind, die über Zwischenzonen mit vergleichsweise niedriger elektrischer Leitfähigkeit miteinander verbunden sind oder aneinander angrenzen. Dazu könnte das die Detektorzone bildende Material beispielsweise amorphe, nano- oder polykristalline Struktur aufweisen. Vorteilhafterweise ist die Detektorzone aber aus in eine Matrix aus geeignet gewähltem, insbesondere nicht leitendem, Material vergleichsweise geringer elektrischer Leitfähigkeit eingebetteten Nanopartikeln mit im Vergleich zum Matrixmaterial höherer elektrischer Leitfähigkeit gebildet.

Die Nanopartikel können dabei aus Material mit geeignet hoher elektrischer Leitfähigkeit, beispielsweise aus halb- oder supraleitendem Material, gebildet sein. Eine besonders bedarfsgerechte Einstellung gewünschter Eigenschaften ist aber erreichbar, indem die Nanopartikel vorteilhafterweise metallisch, insbesondere aus Gold (Au) oder Platin (PI), gebildet sind.

Vorzugsweise ist zur Bildung der Matrix anorganisches, organisches oder dielektrisches Material oder auch Polymermaterial vorgesehen.

Vorteilhafterweise ist das die Detektorzone bildende Material, das als sensorisch aktives Material vorgesehen ist, hinsichtlich der Wahl seiner jeweiligen Parameter in besonderem Maße auf die gewünschte starke Abhängigkeit der elektrischen Leitfähigkeit von einer Deformation oder Längenänderung ausgelegt. Um dies zu gewährleisten, sind insbesondere die Nanopartikel oder die die lokalisierten Zustände hervorrufenden Störstellen hinsichtlich ihrer Größe, Abstände, Beschaffenheit und Partikelanzahldichte bei der Einbettung in die Matrix derart geeignet gewählt, dass die resultierende elektrische Leitfähigkeit im Wesentlichen durch die genannten elektronischen Tunnel-, Ionisations- oder Hüpfprozesse dominiert ist. Dabei weisen die Nanopartikel beispielsweise eine mittlere Partikelgröße von bis zu 10 nm auf. Alternativ sind aber auch Partikelgrößen von bis zu 100 nm oder mehr denkbar, sofern diese elektrisch ausreichend voneinander isoliert und ihre Abstände hinreichend klein sind, so dass sich Tunneleffekte zwischen ihnen einstellen können.

In einer vorteilhaften Weiterbildung ist die Detektorzone durch eine auf einen Trägerkörper aufgebrachte Beschichtung gebildet. Hinsichtlich der sonstigen Eigenschaften des miniaturisierten Federelements, wie beispielsweise Güte, Verformbarkeit oder sonstiger elastischer Eigenschaften, kann dabei auf existierende und im Einsatz bereits bewährte Federelemente zurückgegriffen werden, wobei insbesondere bei einem Einsatz als Balkensonde in einem Rasterkraftmikroskop ein Siliziumsubstrat vorgesehen sein kann. In der Art einer Veredelung eines derartigen üblichen Federelements oder Cantilevers kann dabei durch Aufbringen einer Beschichtung der genannten Art die Detektorzone des Grundkörpers gebildet werden. Alternativ kann aber auch der Grundkörper als Ganzes und somit in seiner Gesamtheit die Detektorzone bilden.

Das Federelement und insbesondere der es bildende Grundkörper ist vorzugsweise hinsichtlich seiner Dimensionierung und Formgebung besonders an den vorgesehenen Einsatzzweck angepasst. Beispielsweise kann der Grundkörper dabei membranartig ausgestaltet sein, was insbesondere einen Einsatz in Drucksensoren oder dergleichen ermöglichen würde. Vorteilhafterweise kann der Grundkörper aber auch in der Art eines in einer Längsrichtung ausgedehnten Stabes ausgestaltet sein, wobei durch die Vorgabe einer derartigen Längsausdehnung eine definierte Messgeometrie geschaffen ist. Der Grundkörper weist dabei vorteilhafterweise einen im Wesentlichen prismenförmigen Querschnitt auf.

Das Federelement eignet sich für eine große Vielzahl von Anwendungen, beispielsweise als hoch kompakte und empfindliche Gas- oder Biosensoren im Bereich der Molekularchemie oder Lifesciences, wie beispielsweise bei der Gaskonzentrationsmessung oder DNA-Analyse. In der Medizin ist der Einsatz von mehrdimensionalen Feldern derartiger Federelemente beispielsweise für die Diagnose von Krankheiten über die Analyse von Stoffwechselprodukten der ausgeatmeten Luft durch direktes Wiegen und Charakterisieren der Moleküle denkbar. Eine Blutanalyse mit Hilfe kleinster miniatursierter Federelemente kann generell auch für die Herzinfarktdiagnostik oder zum Aufspüren von Tumormarkern eingesetzt werden. Im Bereich der Mikrobiologie können derartige Federelemente aufgrund der über die Detektorzone integrierten Auslenkungssensorik für den Nachweis von Mikroorganismen sowie der Untersuchung von Antibiotika-Resistenzen, wie sie bei der medikamentösen Bekämpfung bakterieller Erkrankungen zunehmend häufiger auftreten, eingesetzt werden. Auch können derartige Federelemente im Umweltschutz für den Nachweis toxischer Bestandteile in der Luft, in Gasen und in Flüssigkeiten oder im Auffinden von giftigen oder explosiven Substanzen in der chemischen Industrie eingesetzt werden.

In besonders vorteilhafter Weiterbildung kommt das Federelement jedoch als Cantilever in einem Rasterkraftmikroskop zum Einsatz, wobei der Cantilever zur Bildung der so genannten Balkensonde des Rasterkraftmikroskops in geeigneter Weise mit einer Sonden- oder Abtastspitze versehen ist. Gerade bei dieser Anwendung kommt nämlich die äußerst empfindliche und hoch auflösende Auslenkungssensorik besonders vorteilhaft zum Tragen und ermöglicht die in der Rasterkraftmikroskopie notwendige besonders hohe Messempfindlichkeit.

Das Rasterkraftmikroskop ist dabei zweckmäßigerweise in an sich üblicher Art und Weise für eine laterale Abtastung der Topographie eines Messobjekts ausgelegt. Um dabei die hochempfindliche Änderung der Leitfähigkeit der Detektorzone in Abhängigkeit von der Auslenkung des Federelements besonders günstig nutzen zu können, ist das Rasterkraftmikroskop vorteilhafterweise mit einer Auswerteeinheit versehen, die anhand von Ansteuer- oder Messdaten der Balkensonde einen für die Topographie des Testobjekts charakteristischen Datensatz erzeugt, wobei die Auswerteeinheit bei der Erzeugung des Datensatzes für die Leitfähigkeit der Detektorzone des Cantilevers charakteristische Kennwerte berücksichtigt. Dabei könnte die Topographie beispielsweise in der Art eines Oberflächenreliefs ausgewertet werden. Bei der Auswertung einer magnetisierten Probe mit einer magnetischen Abtastspitze könnte auch eine "magnetische Topographie" ausgewertet werden. Alternativ oder zusätzlich könnte auch eine laterale Bewegung des Cantilevers über die Oberfläche vorgesehen sein, bei der es wegen der Reibung mit der Probenoberfläche zu einer Torsion des Cantilevers kommt (so genannter "Friction Mode").

Beim Betreiben des Rasterkraftmikroskops wird vorteilhafterweise die Auslenkung der Balkensonde anhand eines für die elektrische Leitfähigkeit der Detektorzone der Balkensonde charakteristischen Messwerts ermittelt. Dazu ist die Detektorzone des Federelements vorzugsweise geeignet kontaktiert und mit der Auswerteeinheit des Rasterkraftmikroskops verbunden.

Die mit der Erfindung erzielten Vorteile bestehen insbesondere darin, dass durch die Bereitstellung einer Detektorzone auf der Basis von in eine Matrix eingebetteten Nanopartikeln eine besonders empfindliche Abhängigkeit der elektrischen Leitfähigkeit der Detektorzone von Längenänderungen in kleinstem Maßstab erreichbar ist. Damit sind besonders empfindliche Messungen durchführbar, die mit geringsten Längenänderungen einhergehen, wie beispielsweise die zu einer lokalen Kontraktion oder Ausdehnung der oberflächennahen Bereiche des Federelements führen. Damit ist die Auslenkung des Federelements besonders präzise messbar, so dass hoch genaue Sensoren auf der Basis derartiger Auslenkungsmessungen bereitgestellt werden können. Für Anwendungsfälle, bei denen auch vergleichsweise große Auslenkungen zu erfassen sind, kann das Federelement zusätzlich mit einer verspiegelten Fläche versehen sein, die eine optische Erfassung von Auslenkungen ermöglicht.

Derartige Sensoren können beispielsweise in der Mikromechanik, Biosensorik oder dergleichen zum Einsatz kommen. Durch die Herstellung der Detektorzone oder auch des gesamten Federelementes durch Deponatstrukturierungsverfahren wie insbesondere die elektronenstrahlinduzierte Deposition ist zudem die gezielte Herstellung mikroskopischer Strukturen mit einer hohen Bandbreite gewünschter Eigenschaften möglich, wobei insbesondere durch geeignete Material- und Parameterwahlen zusätzlich zu den elektrischen auch die mechanischen Eigenschaften besonders günstig eingestellt werden können. Insbesondere besteht durch diese Flexibilität die Möglichkeit der Vorab-Einstellung von Federcharakteristiken und -güten der Elemente, die diese insbesondere zum Einsatz in der Rasterkraftmikroskopie besonders ertüchtigen. Darüber hinaus sind durch die Verwendung der elektronenstrahlinduzierten Deposition extrem miniaturisierte Federelemente oder Cantilever herstellbar, wobei insbesondere die Feder- und Detektionsgeometrie nahezu frei wählbar ist. Die Miniaturisierung von mikromechanischen Systemen kann dabei im Vergleich zu üblichen Systemen bedeutend weiter gebracht werden, wobei beispielsweise um den Faktor 1000 reduzierte Längenabmessungen im Vergleich zu mit konventionellen Strukturierungsverfahren hergestellten Systemen erreichbar sind.

Ein Ausführungsbeispiel der Erfindung wird anhand einer Zeichnung näher erläutert. Darin zeigen:
- Fig. 1a, 1b: jeweils ein miniaturisiertes Federelement,
- Fig. 2: schematisch ein Rasterkraftmikroskop, und
- Fig. 3a-3c: jeweils ein auf ein Substrat aufwachsendes Deponat in unterschiedlichen Depositionsphasen.

Gleiche Teile sind in allen Figuren mit denselben Bezugszeichen versehen.

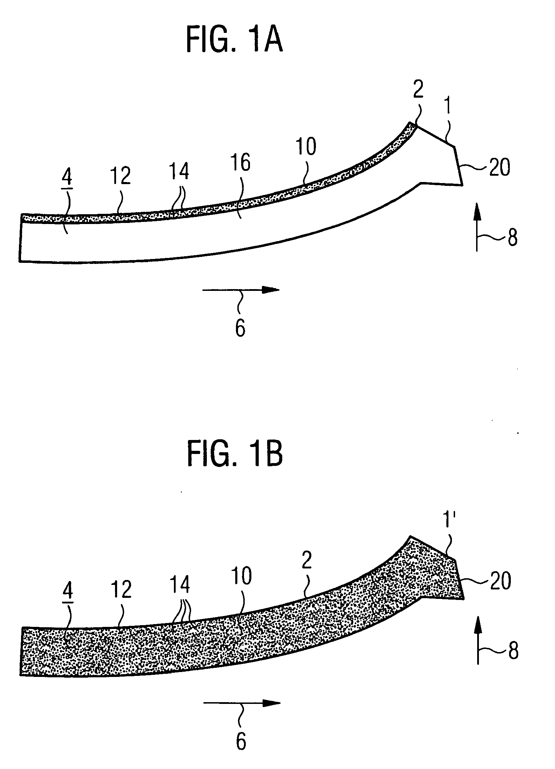

Das miniaturisierte Federelement 1, 1' gemäß Fig. 1a bzw. Fig. 1b ist insbesondere zum Einsatz als Cantilever 2 oder als Balkensonde in einem Rasterkraftmikroskop vorgesehen. Alternativ ist aber auch eine Vielzahl weiterer Anwendungsmöglichkeiten in der Mikrosensorik oder Biosensorik oder dergleichen denkbar. Das miniaturisierte Federelement 1, 1' umfasst einen biegbaren Grundkörper 4, der in der Art eines in einer durch den Pfeil 6 angedeuteten Längsrichtung ausgedehnten Stabes ausgestaltet ist und einen im Wesentlichen prismenförmigen Querschnitt aufweist. Der Grundkörper 4 ist dabei hinsichtlich seiner elastischen Eigenschaften und dergleichen dafür ausgelegt, in einer durch den Pfeil 8 angedeuteten, zur Längsrichtung im Wesentlichen senkrecht stehenden Auslenkungsrichtung durch eine extern anliegende mechanische Kraft ausgelenkt zu werden, wobei sich eine entsprechende Verbiegung des Grundkörpers 4 ergibt. In den Fig. 1a, 1b ist der jeweilige Grundkörper 4 in einer derartig ausgelenkten Stellung gezeigt. Bei Entfall der von außen einwirkenden mechanischen Kraft kehrt der Grundkörper 4 und mit ihm das gesamte Federelement 1, 1' in eine im Wesentlichen gradlinig ausgerichtete Ruheposition zurück. Dehnt man das Felderelement 1, 1' in seinem Umriss senkrecht zur Zwischenebene aus, so ergibt sich eine dünne Membran für die Erfassung von flächig angreifenden Kräften, beispielsweise zur Messung des thermodynamischen Gasdrucks.

Das Federelement 1, 1' ist dafür ausgelegt, die Auslenkung bei Einwirkung einer mechanischen Kraft auf besonders empfindliche und hoch auflösende Weise präzise zu erfassen. Dazu umfasst der Grundkörper 4 des Federelements 1, 1' jeweils eine Detektorzone 10, die von in einer Matrix 12 eingebetteten vorzugsweise metallischen Nanopartikeln 14 gebildet ist. Die Matrix 12 ist dabei im Ausführungsbeispiel als Polymermatrix ausgestaltet, in die die metallischen Nanopartikel 14 eingebettet sind. Die Nanopartikel 14 bilden dabei eingebettete lokalisierte Zustände für elektrische Ladungen. Diese können alternativ oder zusätzlich auch gebildet sein durch Stör- oder Einfangstellen oder durch strukturelle Unordnung, beispielsweise in einem amorphen Medium.

Hinsichtlich der Materialwahl von Matrix 12 und Nanopartikeln 14 sowie hinsichtlich der durchschnittlichen Partikelgröße von im Ausführungsbeispiel etwa 10 nm und der Dichte der Nanopartikel 14 sind die entsprechenden Parameter derart gewählt, dass der elektrische Transport zwischen den Nanopartikeln 14 innerhalb der Matrix 12 durch Hüpfprozesse charakterisiert ist und über Tunnelprozesse geführt wird. Der Leitungsmechanismus in der Detektorzone 10 erfolgt daher durch den thermisch aktivierten Hüpfmechanismus (hopping, nearest neighbour hopping, variable range hopping) zwischen lokalisierten Stellen und entsteht durch einen quantenmechanischen Tunneleffekt. Durch die Einhaltung dieser Randbedingung ist sichergestellt, dass die elektrische Leitfähigkeit der Detektorzone 10 sehr stark und empfindlich auch von kleinsten Längen- oder Abstandsänderungen abhängt, so dass diese mit hoher Empfindlichkeit und Auflösung nachweisbar sind. Wie aus den Darstellungen in Fig. 1 a, Fig. 1b entnehmbar ist, resultiert eine Auslenkung des Grundkörpers 4 in Auslenkungsrichtung zumindest lokal und in Oberflächennähe des Grundkörpers 4 in zumindest geringfügigen Längenänderungen in Längsrichtung, so dass auch derartige Auslenkungen über die Änderung der elektrischen Leitfähigkeit der Detektorzone 10 mit hoher Empfindlichkeit gemessen werden können.

Das Federelement 1 gemäß Fig. 1a ist dabei unter Rückgriff auf ein Federelement herkömmlicher Bauart auf Siliziumbasis aufgebaut, das als Trägerkörper 16 dient und zur Bildung der Detektorzone 10 mit einer oberflächlichen Beschichtung versehen ist. Die Bauart des Federelements 1 nach Fig. 1a entspricht somit einer Veredelung eines herkömmlichen Federelements, bei dem die für die erwünschte hohe Messauflösung vorgesehene Detektorzone 10 durch nachträgliche Beschichtung aufgebracht ist.

Im Gegensatz dazu ist das Federelement 1' gemäß Fig. 1b in der Art eines dreidimensional oder im Bulk vollständig neu hergestellten Grundkörpers 4 aufgebaut, der bereits an sich von den in die Matrix 12 eingebetteten metallischen Nanopartikeln 14 gebildet ist und seinerseits somit in seiner Gesamtheit die Detektorzone 10 bildet. Gerade bei diesem Ausführungsbeispiel sind somit durch geeignete Parameterwahlen neben den elektrischen Eigenschaften, insbesondere den Leitungseigenschaften, der Detektorzone 10 auch die mechanischen Eigenschaften des gesamten Grundkörpers 4 geeignet einstellbar. Insbesondere dominieren in diesem Ausführungsbeispiel die mechanischen Eigenschaften der Matrix 12 die elastischen Eigenschaften (Elastizitätsmodul) sowie die mechanische Güte des Grundkörpers 4 insgesamt. Durch geeignete Wahl des für die Bildung der Matrix 12 herangezogenen Materials und durch die nanopartikulare Struktur des Metallanteils wird bei der Herstellung des Grundkörpers 4 eine Versetzungsbildung weitgehend unterdrückt, so dass die dabei erreichbare Güte und mechanische Beanspruchbarkeit und Ermüdungsfreiheit des Federelements 1' und damit dessen Robustheit und Langlebigkeit bei mechanischen Belastungen besonders hoch ist.

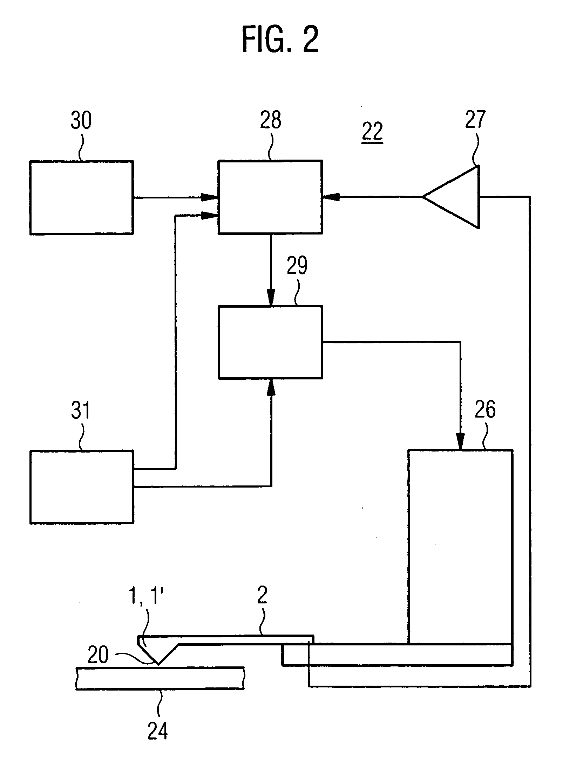

Die Federelemente 1, 1' sind in besonderem Maße für den Einsatz in einem Rasterkraftmikroskop ausgebildet. Dazu ist am Grundkörper 4 jeweils eine Sondenspitze 20 angeformt, über die die Abtastung eines Messobjekts ermöglicht ist. Der Aufbau eines entsprechenden Rasterkraftmikroskops 22 ist in Fig. 2 schematisch gezeigt. Das Rasterkraftmikroskop 22 umfasst einen Cantilever 2, auch als Balkensonde bezeichnet, der als Federelement 1, 1' ausgeführt ist. Die Sondenspitze 20 ist dabei an der Oberfläche eines Messobjekts 24 entlangführbar. Die Sondenspitze 20 wird dabei durch eine piezoelektrische Abtastvorrichtung 26 über die Oberfläche des Messobjekts 24 geführt. Auslenkungen des Cantilevers 2 werden dabei festgestellt, indem über geeignete elektrische Kontaktierung der jeweils vorgesehenen Detektorzonen 10 Änderungen in der elektrischen Leitfähigkeit des den Cantilever 2 bildenden Federelements 1, 1' ermittelt werden.

Eine Abtastvorrichtung (Piezowandler) 26 wird durch einen Piezoverstärker 29 angetrieben. Dessen Ausgangsspannung wird durch einen Komparator 28 vorgegeben, der das vom Auslenkungssensor des Cantilevers 2 kommende, im Verstärker 27 verstärkte Messsignal (Istwert), mit einem Sollwert aus dem Sollwertgeber 30 vergleicht. Die Ausgangsspannung des Komparators ändert sich solange , bis die Sollwert-Istwert-Differenz verschwindet. Damit wird die Höhe des Cantilevers über dem Messobjekt, bzw. die Andruckkraft des Cantilevers bei Messungen im "Kontaktmodus", beim lateralen Rastern konstant gehalten. Aus der Ausgangsspannung des Komparators 28 wird auf die herkömmliche Weise eine Rasterkraftmikroskopabbildung ermittelt.

Für Messungen mit schwingendem Cantilever mit sich periodisch einstellendem Mindestabstand zur Oberfläche des Messobjekts ist ein Oszillator 31 vorgesehen. Das Oszillatorsignal wird dabei dem Komparator zugeführt. Die Messungen der Cantilever-Auslenkung erfordert dann einen phasenempfindlichen Gleichrichter als Teil des Verstärkers 27.

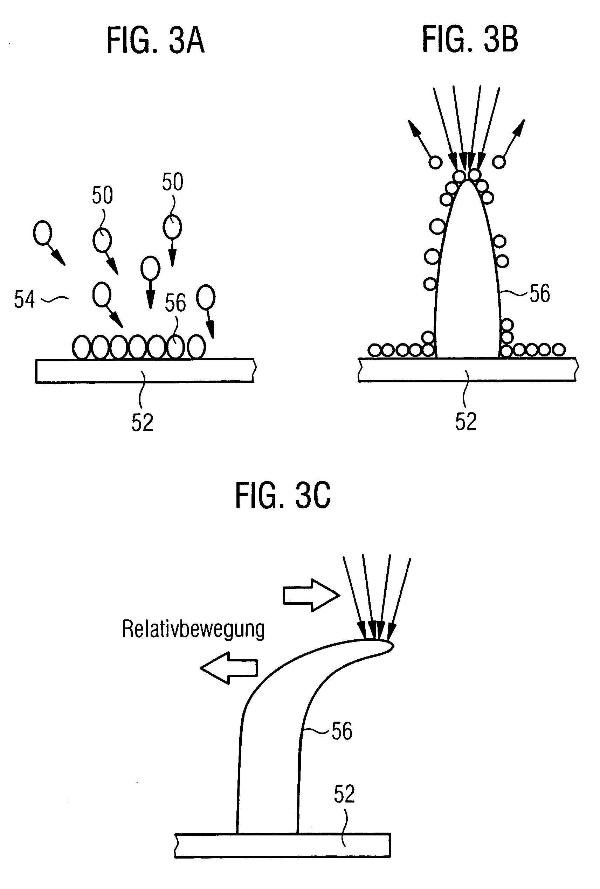

Die Detektorzone 10 des Federelements 1, 1' und möglicherweise auch der gesamte Grundkörper 4 werden durch so genannte Deponatstrukturierung hergestellt, wobei partikulares Wachstum der jeweiligen Strukturen in denjenigen Raumbereichen erzeugt und auch auf diese beschränkt wird, in denen die Entstehung der gewünschten Strukturen vorgesehen ist. Damit entfällt das bei sonstigen miniaturisierten Gebilden erforderliche nachträgliche, beispielsweise lithographische Ätzen. Zur Herstellung der jeweiligen Strukturen ist im Ausführungsbeispiel das Verfahren der so genannten elektronenstrahlinduzierten oder ionenstrahlinduzierten Deposition vorgesehen. Einzelne Entstehungsphasen der entsprechenden Strukturen sind dabei in den Fig. 3a bis 3c dargestellt.

Wie der schematischen Darstellung in Fig. 3a entnehmbar ist, werden in geeigneter Umgebung, insbesondere in einem Vakuum, Präkursor-Substanzen, wie sie in Fig. 3a anhand von Partikeln 50 dargestellt sind, in gasförmiger Form in die Nähe eines Substrats 52 gebracht. Durch Adhäsionskräfte zwischen den Präkursormolekülen und Substrat findet auf dem Substrat eine Adsorption von Präkursormaterial statt.

In einer Depositionszone 54 in unmittelbarer Nähe des Substrats 52 werden die Präkursor-Substanzen energetisch zu einer Umwandlung angeregt, wobei sich die Umwandlungsprodukte in fester und nicht flüchtiger Form als Sediment oder Deponat 56 dauerhaft auf dem Substrat 52 niederschlagen. Die anfängliche Materialablagerung auf dem Substrat 52 dient dabei zugleich als Keimstelle für neue Ablagerungen, welche durch die lokale Position der Energieeinwirkung und deren Verweildauer geführt werden, so dass sich nahezu beliebige dreidimensionale Objekte auf dem Substrat 52 erzeugen lassen. Wie in Fig. 3b gezeigt, ist dabei durch geeignete räumliche Variation des Fokus des Elektronenstrahls oder lonenstrahls die gezielte Abscheidung des Deponats 56 in verschiedenen Geometrien möglich, wobei - wie in Fig. 3c gezeigt - durch eine laterale Relativbewegung auch gekrümmte Strukturen im Deponat 56 erzeugt werden können.

### Bezugszeichenliste

- 1, 1': Federelement
- 2: Cantilever (Balkensonde)
- 4: Grundkörper
- 6, 8: Pfeil
- 10: Detektorzone
- 12: Matrix
- 14: Nanopartikel
- 16: Trägerkörper
- 20: Sondenspitze
- 22: Rasterkraftmikroskop
- 24: Messobjekt
- 26: Abtastvorrichtung (Piezowandler)
- 27: Verstärker (ggf. logarithmisch)
- 28: Komparator
- 29: Piezo-Verstärker
- 30: Sollwertgeber
- 31: Oszillator (optional)
- 50: Partikel (Präkursor-Substanzen)
- 52: Substrat
- 54: Depositionszone
- 56: Deponat

## Patentansprüche

1. Verfahren zur Herstellung eines Federelements (1, 1') mit einem biegbaren Grundkörper (4), der eine Detektorzone (10) aufweist, deren elektrische Leitfähigkeit (σ) durch elektronische Tunnel-, lonisations- oder Hoppingprozesse bestimmt ist, bei dem die Detektorzone (10) durch lokale Energieapplizierung hergestellt wird, indem eine Anzahl von einer Depositionszone (54) in unmittelbarer Nähe eines Substrats (52) gasförmig zugeführten Präkursor-Substanzen (50) energetisch zu einer Umwandlung angeregt werden, wobei sich die Umwandlungsprodukte (56) in fester und nichtflüchtiger Form auf dem Substrat (52) niederschlagen.

2. Verfahren nach Anspruch 1, bei dem der Grundkörper (4) durch lokale Energieapplizierung hergestellt wird.

3. Verfahren nach Anspruch 1 oder 2, bei dem die Detektorzone (10) und/oder der Grundkörper (4) durch elektronenstrahlinduzierte Deposition hergestellt wird.

4. Verfahren nach einem der Ansprüche 1 bis 3, bei dem als Präkursor-Substanzen (50) organische, anorganische, dielektrische oder metallorganische Monomeren, Oligomeren und/oder Polymere verwendet werden.

5. Verfahren nach einem der Ansprüche 1 bis 4, bei dem ein zur energetischen Anregung der Präkursor-Substanzen (50) vorgesehener Ionen-, Photonen- oder Elektronenstrahl hinsichtlich des Substrats (52) lateral oder dreidimensional in Abhängigkeit von einer vorgegebenen Sollgeometrie des Deponats (56) geführt wird.

6. Verfahren nach einem der Ansprüche 1 bis 5, bei dem die Temperatur des Substrats (52) und/oder die Temperatur der Präkursorquelle während der Deposition in Abhängigkeit vom in der Depositionszone (54) ermittelten Dampfdruck der Präkursor-Substanzen (50) geregelt wird.

7. Verfahren nach einem der Ansprüche 1 bis 6, bei dem eine Anzahl der Parameter Art, Menge und/oder Zusammensetzung der Präkursor-Substanzen (50), Gasdruck in der Depositionszone (54), Intensität der lokalen Energieapplizierung, ihre Einstrahldauer, ihre Fokusgröße, Substratmaterial und/oder Substrattemperatur derart eingestellt werden, dass das Federelement (1, 1') eine vorgegebene Federkonstante und/oder eine vorgegebene Güte aufweist oder dass die Detektorzone (10) eine vorgegebene elektrische Leitfähigkeit aufweist.

## Claims

1. A method for manufacturing a spring element (1, 1') with a flexible base body (4) having a detector zone (10) whose electrical conductivity (σ) is determined by electronic tunnel, ionization or hopping processes, wherein the detector zone (10) is produced by means of local energy application, by energetically exciting a number of precursor substances (50) fed in gaseous form to a deposition zone (54) in the immediate vicinity of a substrate (52) to effect a conversion, the conversion products (56) depositing in solid and non-volatile form on the substrate (52).

2. The method of claim 1, wherein the base body (4) is produced by local energy application.

3. The method of claim 1 or 2, wherein the detector zone (10) and/or the base body (4) are produced by electron-beam induced deposition.

4. The method of any of claims 1 to 3, wherein organic, inorganic, dielectric or organometallic monomers, oligomers and/or polymers are used as precursor substances (50).

5. The method of any of claims 1 to 4, wherein an ion, photon or electron beam provided for the energetic excitation of the precursor substances (50) is guided, relative to the substrate (52), laterally or three-dimensionally as a function of a predefined target geometry of the deposit (56).

6. The method of any of claims 1 to 5, wherein the temperature of the substrate (52) and/or the temperature of the precursor source are regulated during deposition, as a function of the vapor pressure of the precursor substances (50) determined in the deposition zone (54).

7. The method of any of claims 1 to 6, wherein a number of the parameters type, quantity and/or composition of the precursor substances (50), gas pressure in the deposition zone (54), intensity of the local energy application, its irradiation duration, its focus size, substrate material, and/or substrate temperature are adjusted such that the spring element (1, 1') exhibits a predefined spring constant and/or a predefined quality or that the detector zone (10) exhibits a predefined electrical conductivity.

## Revendications

1. Procédé pour fabriquer un élément à ressort (1, 1') avec un corps de base (4) flexible ayant une zone détectrice (10) dont la conductibilité électrique (σ) est déterminée par des processus électroniques de tunnel, d'ionisation ou de hopping, dans lequel la zone détectrice (10) est produite au moyen d'application locale d'énergie, en excitant énergétiquement un nombre de substances precurseurs (50) alimentées en forme gazeuse à une zone de dépôt (54) dans la proximité immédiate d'un substrat (52) à effectuer une conversion, les produits de conversion (56) se déposant en forme solide et non volatile sur le substrat (52).

2. Procédé selon la revendication 1, dans lequel le corps de base (4) est produit par application locale d'énergie.

3. Procédé selon la revendication 1 ou 2, dans lequel la zone détectrice (10) et/ou le corps de base (4) sont produits par déposition induite par rayon électronique.

4. Procédé selon l'une quelconque des revendications 1 à 3, dans lequel des monomères, oligomères et/ou polymères organiques, inorganiques, diélectriques ou organométalliques sont utilisés comme substances precurseurs (50).

5. Procédé selon l'une quelconque des revendications 1 à 4, dans lequel un rayon ionique, photonique ou électronique pourvu pour l'excitation énergétique des substances precurseurs (50) est guidé, relativement au substrat (52), latéralement ou tridimensionellement en fonction d'une géométrie prescrite prédéfinie du dépôt (56).

6. Procédé selon l'une quelconque des revendications 1 à 5, dans lequel la température du substrat (52) et/ou la température de la source précurseur sont réglées pendant le dépôt, en fonction de la pression de vapeur des substances precurseurs (50) déterminée dans la zone de dépôt (54).

7. Procédé selon l'une quelconque des revendications 1 à 6, dans lequel un nombre des paramètres type, quantité et/ou composition des substances precurseurs (50), pression de gaz dans la zone de dépôt (54), intensité de l'application locale d'énergie, durée de son irradiation, grandeur de son foyer, matériau du substrat, et/ou température du substrat sont réglés de manière que l'élément à ressort (1, 1') présente une constante de rappel prédéfinie et/ou une qualité prédéfinie ou que la zone détectrice (10) présente une conductibilité électrique prédéfinie.
